# EUROPÄISCHE PATENTSCHRIFT

(11) **EP 2 012 961 B1**
(45) Veröffentlichungstag und Bekanntmachung des Hinweises auf die Patenterteilung: **07.05.2014**
(21) Anmeldenummer: 07723180.1
(22) Anmeldetag: 12.03.2007
(51) Int. Cl.: B23K 9/04, B23K 9/18, B23K 9/32, B23K 25/00, B23K 101/04

(54) **VERFAHREN ZUR AUFSCHWEISSUNG EINER EINZIGEN NUTZSCHICHT AUF EINEN GRUNDWERKSTOFF UNTER VERWENDUNG MEHRERER FÜLLDRAHTELEKTRODEN, METALLPULVER UND SCHWEISSPULVER**
METHOD OF WELDING A SINGLE WEAR LAYER ONTO A PARENT MATERIAL USING A PLURALITY OF FLUX-CORED WIRE ELECTRODES, METAL POWDER AND WELDING POWDER
PROCÉDÉ DE SOUDURE D'UNE SEULE COUCHE D'USURE SUR UN MATÉRIAU DE BASE AU MOYEN DE PLUSIEURS FILS- ÉLECTRODES FOURRÉS, DE POUDRE MÉTALLIQUE ET DE POUDRE À SOUDER

(30) Priorität: 24.03.2006 DE 102006013552
(43) Veröffentlichungstag der Anmeldung: 14.01.2009
(73) Patentinhaber: Gustav Wiegard Maschinenfabrik GmbH & Co. KG, 58455 Witten (DE)
(72) Erfinder: BRASS, Walter, 58453 Witten (DE); SCHOLZ, René, 67269 Grünstadt (DE)
(74) Vertreter: Brune, Axel
(86) Internationale Anmeldenummer: PCT/EP2007/002131
(87) Internationale Veröffentlichungsnummer: WO 2007/110147

(56) Entgegenhaltungen:
- JP-A- 2 052 174
- US-A- 2 810 063
- US-A- 6 127 644
- US-A1- 2002 079 301
- DATABASE WPI Week 200469 Derwent Publications Ltd., London, GB; AN 2004-700731 XP002439285 -& CN 1 511 670 A (WEILIN TRADE CO LTD JIANGMEN CITY) 14. Juli 2004 (2004-07-14)
- "METAL-POWDER TWIN-WIRE SUBMERGED-ARC WELDING" WELDING AND METAL FABRICATION, IPC LTD. HAYWARDS HEATH, GB, Bd. 66, Nr. 7, August 1998 (1998-08), Seiten 21-22,24, XP000777417 ISSN: 0043-2245

## Beschreibung

Die vorliegende Erfindung betrifft ein Verfahren zur Aufschweißung einer Nutzschicht auf einen Grundwerkstoff, insbesondere ein Unterpulverauftragsschweißverfahren gemäß dem Oberbegriff des Anspruchs 1 (siehe, z.B., CNI 511 670 A).

Das Unterpulverschweißen ist eine bekannte Verfahrenstechnik, die fast ausschließlich für den vollmechanisierten Schweißbetrieb genutzt wird. Sie hat die vorrangige Anwendung bei Verbindungsschweißungen, weil hierbei durch den tiefen Einbrand als Folge der verfahrenstechnischen Eigenschaften - man spricht von 2/3 (Grundwerkstoff) und 1/3 (Nahtüberhöhung)-Effekt - eine gute wirtschaftliche Nutzung vorliegt. Überlagert wird dies durch die Möglichkeit der Anwendung hoher Energiedichten, aber auch den Einsatz spezieller Schweißpulver für hohe Schweißgeschwindigkeiten bis etwa 2,5 m/min.

Eine Variante des Unterpulverschweißens stellt das Unterpulver-Auftragschweißen (UP- Auftragschweißen) dar. Mit diesem Verfahren werden großflächig Schichten auf einen Grundwerkstoff, beispielsweise zur Reparatur einer Rolle, aufgeschweißt. Für das UP-Auftragsschweißen sind zwar die verfahrensbedingten Leistungswerte, nicht aber der hohe Einbrand sonderlich begehrt. Das hierbei entstehende Einbrandprofil führt zu starker dendritischer Struktur, die wiederum bei den hier vorliegenden Legierungen und den damit verbundenen Härten eine Tendenz zur Rissbildung aufweist. Überdies bedeutet dies, dass aufgrund der hohen Aufmischung durch den Grundwerkstoff erst ab der 3. Schweißlage mit den gewünschten Eigenschaften des Schweißgutes gerechnet werden darf. Auch muss als Folge des erhöhten Wärmeeintrages mit zunehmenden Eigenspannungen des Bauteiles und damit mit Verwerfungen gerechnet werden. Zusammenfassend bleibt die Feststellung, dass dem UP-Schweißverfahren zum Auftragschweißen aufgrund der sehr spezifischen Eigenschaften nicht unbedingt die Priorität zu erteilen ist.

Um das Einbrandprofil für das UP-Auftragschweißen vorteilhafter zu gestalten, werden als Schweißzusatz Bandelektroden eingesetzt, wonach sich der Aufmischungsgrad auf etwa 25 % reduziert. Hierzu schlägt die DE 22 38 321 und US 2,810,063 beispielsweise die Verwendung einer Bandelektrode und die Zugabe von Metallpulver in das Schweißbad vor. Die Bandelektrode erzeugt tendenziell einen geringeren Einbrand. Begründet ist diese Eigenschaft unter anderem in dem oszillierenden Lichtbogen bzw. übergehenden Metalltropfen, die an den Bandkanten hin und her wandern. Ferner erzeugt die Bandelektrode wegen des tendenziell größeren Querschnitts eine geringere Stromdichte und damit einen geringeren Einbrand. Die Zugabe von Metallpulver hat unter anderem einen energieabsorbierenden, sprich kühlenden Effekt, so dass der Einbrand auf diese Weise ebenfalls verringert werden kann. Allerdings ist hierbei die Lagenzahl noch immer mit zwei bzw. drei Schweißraupen übereinander auszuführen bis eine verwertbare äußere Schicht, sprich eine Nutzschicht entsteht.

Der Einsatz einer Bandelektrode ist jedoch dahingehend eingeschränkt, dass die Verfügbarkeit der jeweiligen Bandlegierungen nicht gegeben ist. Man kompensiert dies über ein auflegierendes Schweißpulver, was allerdings in aller Regel nur für Gesamtlegierungsgehalte des Schweißgutes bis etwa 15 % möglich ist. Dieser Nachteil wird durch Sinterbänder eliminiert, so dass hierfür legierungsneutrale Schweißpulver Verwendung finden können. Sinterbänder lassen sich jedoch nicht in allen Legierungen herstellen und sind vergleichsweise recht teuer.

Zusammenfassend lässt sich feststellen, dass die bekannten UP-Auftragsschweißverfahren, wie sie beispielsweise zur Aufarbeitung von Rollen, Walzen oder ähnlichen länglichen Werkstücken eingesetzt werden, darauf abzielen, einen tiefen Einbrand zu vermeiden, um eine Aufmischung der Auftragsschicht mit dem Grundwerkstoff möglichst gering zu halten. Dennoch wird die Legierungszusammensetzung einer unmittelbar auf den Grundwerkstoff aufgeschweißten Schicht durch den aufgeschmolzenen Grundwerkstoff derart nachteilig beeinflusst, dass mehrere Schichten übereinander aufgeschweißt werden müssen um eine äußere Nutzschicht zu erzeugen, die den Anforderungen an Legierung und Härte entspricht. Um beispielsweise eine Nutzschicht von 2mm Dicke zu erzeugen müssen mindestens zwei Lagen aufgeschweißt werden.

Der Nachteil bekannter Verfahren liegt daher in der Anzahl der aufzuschweißenden Schichten zur Erzeugung einer brauchbaren Nutzschicht und dem sich daraus ergebenden Material-, Energie- und Zeitaufwand.

Aus der CN 1511670 ist beispielsweise ein verbessertes Unterpulver Schweißverfahren mit doppelten parallelen Drähten oder einzelnen Drähten unter Zugabe von Metallpulver bekannt geworden. Während des Schweißens haftet Metallpulver an dem niedrig legierten Stahlschweißdraht um die aufgeschweißte Schicht mit den benötigten Legierungskomponenten zu versorgen. Der vorgeschlagene Prozess kann die Nahtwurzel des geschweißten Teils komplett ohne Riss und andere Schweißfehler schweißen. Der Schweißprozess soll eine hohe Produktionseffektivität, weniger Aufmischung des Grundmaterials, eine kleine Hitzeeinflusszone und eine homogene Schweißschichtstruktur aufweisen. Der aufgeschweißte Teil soll eine Verschleißfestigkeit, eine Korrosionsbeständigkeit und eine lange Lebensdauer besitzen.

Obgleich das hier vorgeschlagene Unterpulverschweißverfahren eine hohe Produktionseffektivität aufweisen soll, ist damit kein Hinweis darauf gegeben, inwieweit eine Reduktion der aufzuschweißenden Schichten erreicht werden kann.

Aus der US 6,127,644 ist ein verbessertes Elektroschlackeschweißverfahren bekannt geworden, welches Drahtelektroden statt Bandelektroden vorschlägt. Ferner wird hier beschrieben, dass mit Hilfe des vorgeschlagenen Elektroschlackeschweißverfahrens im Vergleich zum Unterpulverschweißen weniger Schichten aufgeschweißt werden müssen. Hier ist jedoch ebenfalls kein Hinweis darauf zu erwarten, inwieweit ein Unterpulverschweißverfahren, welches mit der Zufuhr von Schweißpulver arbeitet, verändert werden muss, um eine Reduzierung der aufzuschweißenden Schichten zur Erlangung einer Nutzschicht zu erreichen.

Die Aufgabe der vorliegenden Erfindung liegt nunmehr darin, ein Auftragsschweißverfahren vorzuschlagen, welches die Aufschweißung einer Nutzschicht in einem einzigen Arbeitsgang ermöglicht, ohne dass es der Aufschweißung mehrerer Schichten aufeinander bedarf. Es wird angestrebt, dass die erfindungsgemäß erzeugte einzige Nutzschicht die gleichen oder bessere Eigenschaften, insbesondere hinsichtlich Härte, Korrosion und/oder Verschleiß wie eine herkömmlich erzeugte äußere Nutzschicht in Mehrlagenaufschweißtechnik aufweist.

Erfindungsgemäß wird diese Aufgabe durch ein Verfahren mit den kennzeichnenden Merkmalen des Anspruchs 1 gelöst. Dadurch, dass es sich bei den Drahtelektroden um Fülldrahtelektroden, aufweisend einen Kern und eine Mantelelektrode handelt, wobei die Fülldrahtelektrode eine höhere Legierung als die Schweißgutanalyse der aufzuschweißenden Nutzschicht aufweist, wobei die Mantelelektrode der Fülldrahtelektrode aus einer Legierung besteht, die zur Anhaftung des Metallpulvers geeignete Magnetisierungseigenschaften aufweist, wird folgender vorteilhafter Effekt erzielt. Drahtelektroden, insbesondere Fülldrahtelektroden erzeugen einen im Vergleich zu Bandelektroden tieferen Einbrand und eine größere Aufmischung mit dem Grundwerkstoff, welche eigentlich gemäß den Empfehlungen des Standes der Technik vermieden werden soll. Vorteilhaft für das hier vorgeschlagene Verfahren sind beispielsweise Aufmischungen von 40-50 %, die weit jenseits der Empfehlungen des Standes der Technik für UP-Auftragsschweißen liegen. Als Resultat des tiefen Einbrands und der erheblichen Zufuhr von hochlegierten Zuschlagswerkstoffen wirkt das Schweißbad wie ein Schmelztiegel und der aufgeschmolzene Grundwerkstoff wird quasi umgewandelt in eine einzige ausreichend legierte Nutzschicht. Durch geeignete Einstellung der Schweißparameter, sowie Menge und Auswahl des zugeführten metallischen Pulvers und/oder der Fülldrahtelektroden, lässt sich die Zusammensetzung einer derart in der erfindungsgemäßen Einlagentechnik aufgeschweißten Schicht so einstellen, dass sie der Zusammensetzung einer dritten, nach dem herkömmlichen Verfahren mit geringer Aufmischung, aufgeschweißten Schicht entspricht. Durch die Verwendung von Fülldrahtelektroden ergibt sich noch eine weitere Möglichkeit, die beispielsweise bei Verwendung von Massivdrahtelektroden nicht gegeben ist. Sofern ein hochlegierter Massivdraht gewählt wird, ist dieser in der Regel nicht magnetisierbar. Die hohen Legierungsanteile werden jedoch für die Aufbereitung des Schmelzbades benötigt. Die Verwendung einer Fülldrahtelektrode ermöglicht jedoch die Verwendung einer gut magnetisierbaren Mantelelektrode, an der das Metallpulver gut anhaften und dementsprechend eine große Menge Metallpulver in das Schweißbad transportiert werden kann. Dies könnte mit einer Massivdrahtelektrode nicht erreicht werden, da eine Massivdrahtelektrode entweder hochlegiert und dementsprechend nicht oder nur schwach magnetisierbar ist, oder aber niedriglegiert und zwar magnetisierbar, jedoch auf Grund des geringen Gehalts an Legierungselementen ungeeignet ist um das Schweißbad für den gewünschten Legierungsgehalt der einzigen aufzuschweißenden Nutzschicht aufzulegieren. Auch kann über die Dicke und den Durchmesser der Mantelelektrode die Schweißstromdichte und damit der gewünschte Einbrand, als auch die Menge des anhaftenden Metallpulvers auf komfortable Weise beeinflusst werden, beispielsweise kann eine dünnwandige Mantelelektrode gewählt werden, wodurch sich ein vergleichsweise geringer Querschnitt und damit eine vergleichsweise hohe Stromdichte bei gleichzeitig großer Mantelfläche, also Anhaftfläche für das Metallpulver, ergibt. Der Kern überträgt, außer Kriechströmen, in der Regel wenig Schweißstrom, so dass die Einstellung vorzugsweise über die Ausgestaltung der Mantelelektrode erfolgen kann. Es ist beachtlich, dass sich derartige Möglichkeiten bei einer Massivdrahtelektrode nicht ergeben, da die Querschnittsfläche und die Mantelfläche in einer unmittelbaren Abhängigkeit zueinander stehen. Es ist ferner bemerkenswert, dass das hier vorgeschlagene Verfahren sowohl Material, Energie als auch Bearbeitungszeit einspart, da lediglich eine einzige Schicht aufgeschweißt werden muss. Es wurde ebenfalls festgestellt, dass sich die Schichtdicke und somit die Auftragsleistung unter Anwendung des erfindungsgemäßen Verfahrens nahezu verdoppeln ließ.

In einer vorteilhaften Ausgestaltung des vorgeschlagenen Verfahrens hat sich herausgestellt, dass sich besonders gute Ergebnisse erzielen lassen, wenn die Fülldrahtelektrode einen etwa doppelt so hohen Chromanteil wie die herzustellende einzige Nutzschicht aufweist. Eine typische Nutzschicht, die auf eine Stranggießrolle aufgeschweißt wird, enthält beispielsweise etwa 12-14% Chrom, so dass ein Anteil von etwa 24-28% Chrom in der Fülldrahtelektrode zu einer Umwandlung des aufgeschmolzenen Grundwerkstoffes und dem zugeführten Metallpulver in eine Nutzschicht mit 12-14% Chrom führt.

In einer vorteilhaften Ausgestaltung des vorgeschlagenen Verfahrens hat sich herausgestellt, dass sich besonders gute Ergebnisse erzielen lassen, wenn die Fülldrahtelektrode einen etwa doppelt so hohen Nickelanteil wie die herzustellende einzige Nutzschicht aufweist. Eine typische Nutzschicht, die auf eine Stranggießrolle aufgeschweißt wird, enthält beispielsweise etwa 3-4% Nickel, so dass ein Anteil von etwa 6-8% Nickel in der Fülldrahtelektrode zu einer Umwandlung des aufgeschmolzenen Grundwerkstoffes und dem zugeführten Metallpulver in eine Nutzschicht mit 3-4% Nickel führt.

In einer vorteilhaften Ausgestaltung des vorgeschlagenen Verfahrens hat sich herausgestellt, dass sich besonders gute Ergebnisse erzielen lassen, wenn die Fülldrahtelektrode einen etwa doppelt so hohen Molybdänanteil wie die herzustellende einzige Nutzschicht aufweist. Eine typische Nutzschicht, die auf eine Stranggießrolle aufgeschweißt wird, enthält beispielsweise etwa 0,5-1% Molybdän, so dass ein Anteil von etwa 1-2% Molybdän in der Fülldrahtelektrode zu einer Umwandlung des aufgeschmolzenen Grundwerkstoffes und dem zugeführten Metallpulver in eine Nutzschicht mit 0,5-1% Molybdän führt.

In einer vorteilhaften Ausgestaltung der vorliegenden Erfindung kann vorgesehen sein, dass die Fülldrahtelektrode eine kreisförmige Querschnittsfläche aufweist, wobei der Durchmesser der Fülldrahtelektrode etwa 2 bis 3,2mm beträgt. Diese vergleichsweise dünnen Fülldrahtelektroden haben sich als besonders vorteilhaft zur Erzeugung eines tiefen Einbrands erwiesen.

Es ist weiterhin zur Erzeugung eines tiefen Einbrands vorgesehen, dass jede Fülldrahtelektrode mit etwa 300 bis 475 A Schweißstrom beaufschlagt ist.

Es kann ebenfalls vorteilhafterweise vorgesehen sein, dass das Volumen der Mantelelektrode etwa 70% des Gesamtvolumens der Fülldrahtelektrode ausmacht.

Um eine Magnetisierung der Mantelelektrode zu gewährleisten ist vorteilhafterweise vorgesehen, dass die Fülldrahtelektroden mit Gleichstrom beaufschlagt werden, wobei der + Pol an der Fülldrahtelektrode anliegt.

In einer vorteilhaften Ausgestaltung des vorgeschlagenen Verfahrens kann vorgesehen sein, dass die Fülldrahtelektroden im Wesentlichen parallel, jedoch in einem ausgewählten Abstand voneinander zugeführt werden. Durch Auswahl eines optimierten Abstands der Fülldrahtelektroden wird die Voraussetzung einer magnetischen Beeinflussung geschaffen. Auch wird im Unterschied zu einer Bandelektrode die Möglichkeit geschaffen, dass Metallpulver durch den Zwischenraum zwischen den beiden Füllbandelektroden in das Schweißbad transportiert werden kann. Dementsprechend kann die zugeführte Menge an metallhaltigem Pulver gegenüber der Verwendung einer Bandelektrode erhöht werden.

Vorteilhafterweise kann weiterhin vorgesehen sein, dass die Fülldrahtelektroden quer zur Schweißrichtung pendeln. Durch diese Maßnahme kann insbesondere eine dendritische Nahtausbildung, der sogenannte Dendritenstamm, vermieden und der Aufmischungsgrad eingestellt werden. Letztendlich wird durch diese Maßnahme die Risssicherheit der aufgeschweißten Schicht insgesamt erhöht. Die durch das Pendeln bedingte geringe Nahtüberhöhung bedeutet gleichermaßen geringe Kosten.

Gemäß der Erfindung wird vorgesehen, dass die Fülldrahtelektrode in Summe aus Mantelelektrode und Kern etwa einen Anteil von < 0,08% Kohlenstoff; 0,2-0,3% Silizium; 0,6-0,8% Mangan; 24-28% Chrom; 6-8% Nickel und 1-2% Molybdän und 0,1 bis 0,3% Vanadium aufweist. Eine derartige Zusammensetzung bietet den Vorteil, dass durch die zu erwartende Aufmischung mit dem Grundmaterial, die für Stranggießrollen übliche Werkstoffzusammensetzung der Nutzschicht mit 12-14% Chrom, 3-4% Nickel und 0,5-1 % Molybdän entsteht. Dieses Beispiel zeigt eine mögliche Auswahl der Legierungselemente der Fülldrahtelektrode im Bezug auf den Grundwerkstoff, wobei die Legierungsauswahl der Anforderung entsprechen sollte, dass die Fülldrahtelektrode eine etwa doppelt so hohe Legierung wie die aufzuschweißende Nutzschicht haben soll.

In einer weiteren vorteilhaften Ausgestaltung des vorliegenden Verfahrens kann vorgesehen sein, dass die Mantelelektrode der Fülldrahtelektrode etwa einen Anteil von <0,05% C; <0,10% Si; <0,40% Mn; <0,015% P; <0,015% S aufweist. Eine Mantelelektrode mit zuvor genannter Legierungszusammensetzung weist vornehmlich eine gute Magnetisierbarkeit auf. Diese Eigenschaft ist insbesondere deshalb von Vorteil, damit ausreichend Metallpulver an der Fülldrahtelektrode anhaften kann, welches in das Schweißbad transportiert werden soll.

In einer weiteren vorteilhaften Ausgestaltung des vorliegenden Verfahrens kann vorgesehen sein, dass die Zusammensetzung des Metallpulvers der Schweißgutanalyse der aufzuschweißenden Nutzschicht entspricht. Durch diese Maßnahme kann eine hinsichtlich der Legierungszusammensetzung überaus homogene Nutzschicht erzeugt werden. Dieser Effekt beruht insbesondere darauf, dass beispielsweise Mengenabweichungen des zugeführten Metallpulvers, beispielsweise durch eine Fehlfunktion der Zuführeinrichtung, grundsätzlich keine Abweichung in der Legierungszusammensetzung der zu erzeugenden Nutzschicht zur Folge haben wird, allenfalls wird sich die Dicke der Nutzschicht ändern, da weniger Metallpulver zugeführt worden ist.

Vorteilhafterweise kann vorgesehen sein, dass das Metallpulver ferritische Anteile aufweist, so dass das Metallpulver bei den unter Strom stehenden magnetisierten Mantelelektroden in vorteilhafter Weise ankoppeln kann.

Es ist weiterhin vorteilhafterweise vorgesehen, dass das Metallpulver stromlos zugeführt wird, so dass es durch die Prozesswärme des Schweißbades aufgeschmolzen wird und dem Schweißbad überflüssige Wärme entziehen kann. Dementsprechend kann durch die Dosierung des Metallpulvers in angemessener Weise auf die Schweißbadtemperatur und damit auf die Ausbildung des Schweißbades Einfluss genommen werden.

In einer weiteren vorteilhaften Ausgestaltung des vorgeschlagenen Verfahrens kann vorgesehen sein, dass ein Metallpulver in gas- oder wasserverdüster Form verwendet wird. Hierdurch ergibt sich unter anderem der Vorteil, dass gasverdüste Pulver einfacher zu fördern sind, da sie feinkörnig und rund sind. Metallpulver in wasserverdüster Form ist dagegen günstiger.

Alternativ kann ebenfalls vorgesehen sein, dass ein Metallpulver in agglomerierter Form verwendet wird. Agglomeriertes Metallpulver weist den Vorteil auf, dass es in jeder beliebigen Legierungszusammensetzung herstellbar ist.

In einer vorteilhaften Ausgestaltung des vorgeschlagenen Verfahrens kann vorgesehen sein, dass das Metallpulver etwa einen Anteil von < 0,08% Kohlenstoff; 0,15-0,3% Silizium; 0,4-0,8% Mangan; 12-14% Chrom; 3-4% Nickel; 0,5-1% Molybdän und 0,1 bis 0,3% Vanadium aufweist. Dies kann dann erfindungsgemäß einer Zusammensetzung der aufzuschweißenden Nutzschicht entsprechen. Auch zeigt sich hier das Verhältnis zwischen "höher" und "niedrigerer" Legierung zwischen der Fülldrahtelektrode und dem metallhaltigen Pulver. Es ist erkennbar, dass insbesondere ein etwa doppelt so hoher Anteil von Chrom, Nickel und Molybdän in der Fülldrahtelektrode zu der gewünschten Legierungszusammensetzung der Nutzschicht führt.

In einer weiteren vorteilhaften Ausgestaltung des vorliegenden Verfahrens kann vorgesehen sein, dass ein legierungsneutrales Schweißpulver verwendet wird. Ein legierungsneutrales Schweißpulver hat keinen nennenswerten Einfluss auf die Legierungszusammensetzung der aufzuschweißenden Nutzschicht. Grundsätzlich fällt daher durch ein legierungsneutrales Schweißpulver ein möglicher Störfaktor weg.

Auch kann vorteilhafterweise vorgesehen sein, dass es sich bei dem Schweißpulver um ein mineralisches Schweißpulver handelt, so dass das Schweißpulver in vorteilhafter Art und Weise metallurgische Aufgaben, wie beispielsweise die Ausformung der Schweißnaht unterstützen kann. Auch verhindert das Schweißpulver das Ablaufen des flüssigen Schweißbades.

Zur weiteren Optimierung des vorgeschlagenen Verfahrens kann vorgesehen sein, dass ein Schweißpulver verwendet wird, dessen Schlacke unter Berücksichtigung des Einsatzes an rotationssymmetrischen Bauteilen eine hohe Viskosität und eine gute Schlackelöslichkeit bei erhöhter Arbeittemperatur aufweist. Durch diese Maßnahme wird die Prozesssicherheit des vorgeschlagenen UP-Auftragsschweißverfahrens weiter erhöht.

Es kann weiterhin vorteilhafterweise vorgesehen sein, dass das Schweißpulver etwa einen Anteil von 10% SiO₂ + TiO₂; 35% Al₂O₃ + MnO; 50% CaF₂ aufweist. Das vorgeschlagene Schweißpulver ermöglicht einen guten Schlackeabgang auch bei einer Arbeitstemperatur bis 350 °C. Ferner unterstützt das vorgeschlagene Schweißpulver die Anforderungen an die Viskosität der Schlacke, damit diese die Naht formt und nicht abläuft, was zu einer schweren Schlackelöslichkeit führen wurde.

In besonders vorteilhafter Weise eignet sich das vorgeschlagene Verfahren zur Aufarbeitung von symmetrischen Rotationskörpern, wie beispielsweise Rollen aus Kaltwalzanlagen. In diesem Zusammenhang kann es vorteilhafterweise vorgesehen sein, dass es sich bei dem Grundwerkstoff um eine Rolle handelt, wobei die Fülldrahtelektroden, das Metallpulver und das Schweißpulver durch einen Schweißkopf zugeführt werden, wobei die Rolle unterhalb des Schweißkopfes in Drehung versetzt wird, wobei der Schweißkopf in Längsrichtung der Rolle vorgeschoben wird.

In einer weiteren vorteilhaften Ausgestaltung des vorliegenden Verfahrens kann vorgesehen sein, dass die Nutzschicht aus etwa 25% Schweißdraht, 25 % Metallpulver und 50% aus der aufgeschmolzenen Oberfläche des Werkstücks besteht. Diese überaus hohe Aufschmelzung der Werkstückoberfläche ist eigentlich nur durch das erfindungsgemäß vorgeschlagene Verfahren erreichbar. Es kann demnach aber vorteilhafterweise ein erheblicher Anteil des Werkstoffmaterials zur Erzeugung der Nutzschicht ausgenutzt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: ein Schweißkopf für ein erfindungsgemäßes Verfahren zur Aufschweißung einer Nutzschicht auf einen Grundwerkstoff;
- Fig. 2: eine schematische Darstellung einer Schweißanlage mit einem Schweißkopf zu Ausführung des erfindungsgemäßen Verfahrens;
- Fig. 3: eine schematische Darstellung der Schichtstärken am Beispiel einer Rolle;
- Fig. 4: ein Schnitt durch eine mit dem erfindungsgemäßen Verfahren hergestellte Versuchsrolle (Segment);
- Fig. 5: ein Schnitt durch eine mit dem erfindungsgemäßen Verfahren hergestellte Versuchsrolle (Segment);
- Fig. 6: ein Schnitt durch eine mit dem erfindungsgemäßen Verfahren hergestellte Versuchsrolle (Segment) mit eingezeichneten Härtemesspunkten;
- Fig. 7: ein Schnitt durch eine mit dem erfindungsgemäßen Verfahren hergestellte Versuchsrolle (Segment) mit eingezeichneten Härtemesspunkten;
- Fig. 8: eine vergrößerte Darstellung des Probestücks gemäß Fig. 5 bzw. 6 mit eingezeichneten Werkstoffanalysemesspunkten;

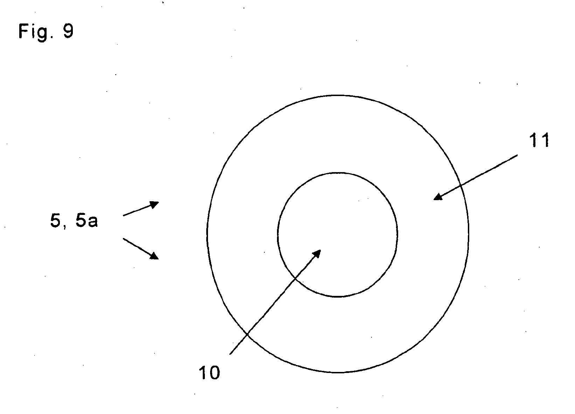

- Fig. 9: eine schematische Querschnittsdarstellung einer Fülldrahtelektrode für das erfindungsgemäße Verfahren.

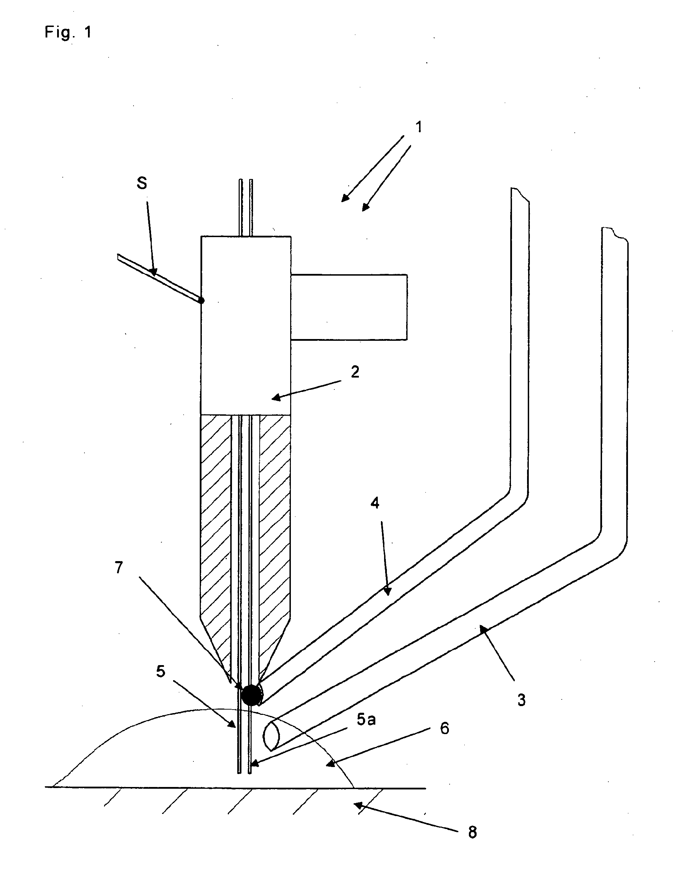

Zunächst wird auf Fig. 1 Bezug genommen.

Ein Schweißkopf 1 zur Durchführung des erfindungsgemäßen Verfahrens umfasst im Wesentlichen eine erste Zuführeinrichtung 2 für eine erste Fülldrahtelektrode 5 und eine zweite Fülldrahtelektrode 5a, eine zweite Zuführeinrichtung 3 für Schweißpulver 6 und eine dritte Zuführeinrichtung 4 für Metallpulver 7. Darüber hinaus weist der Schweißkopf einen Stromanschluss S für den benötigten elektrischen Schweißstrom auf. Es werden sowohl die erste Fülldrahtelektrode 5, als auch die zweite Fülldrahtelektrode 5a mit Schweißstrom versorgt. Auch werden die Fülldrahtelektrode 5 und 5a, Metallpulver 7 und Schweißpulver 6 in geeigneten Reservoiren bevorratet und dem Schweißkopf 1 durch geeignete Einrichtungen zugeführt.

Bei der ersten Zuführeinrichtung 2 für die Fülldrahtelektroden 5 und 5a handelt es sich vorzugsweise um eine Mehrdrahtausführung, die dazu geeignet ist, mindestens zwei Fülldrahtelektroden 5 und 5a im wesentlichen parallel zuzuführen, wobei die Fülldrahtelektroden 5 und 5a vorzugsweise quer zur Schweißrichtung ausgerichtet sind. Denkbar ist auch die Zuführung weiterer Fülldrahtelektroden über denselben bzw. über einen oder mehrere zusätzliche Schweißköpfe. Denkbar ist es selbstverständlich auch, die erste Fülldrahtelektrode 5 über einen ersten Schweißkopf und die zweite Fülldrahtelektrode 5a über einen weiteren Schweißkopf zuzuführen.

Die hier dargestellte bevorzugte Ausführungsform des Schweißkopfes 1 ist weiterhin mit einer Pendeleinrichtung ausgestattet, welche den Schweißkopf 1 in eine Pendelbewegung gegenüber dem Grundwerkstoff versetzen kann. Als Pendelrichtung kommt, beispielsweise bei einem Grundwerkstoff in Form einer Rolle 8, eine Richtung parallel zur Längsachse der Rolle 8 in Frage. Das Schweißen erfolgt in aller Regel mit pendelndem Schweißkopf bis zu einer Nahtbreite von etwa 55 mm. Durch diese Maßnahme kann insbesondere eine dendritische Nahtausbildung, der sogenannte Dendritenstamm, vermieden werden. Letztendlich wird durch diese Maßnahme die Risssicherheit der aufgeschweißten Schicht insgesamt erhöht. Durch die hier vorgeschlagen Ausgestaltung des Schweißkopfes 1, insbesondere durch die oben genannte Zweidrahtzuführung und die Pendeleinrichtung, lassen sich Schweißnähte von etwa 50mm Breite und einer Dicke von etwa 5 bis 6mm erzeugen. Die Dicke bezieht sich hier auf die Dicke oberhalb der ursprünglichen Grundwerkstoffoberfläche.

In der hier vorgeschlagen bevorzugten Ausführungsform der vorliegenden Erfindung besteht die Fülldrahtelektrode aus einer röhrenförmigen Mantelelektrode 11 und einem Kern 10 aus mineralischen und/oder metallischen Bestandteilen. Die Fülldrahtelektroden 5, 5a liegen in nahtloser oder formgeschlossener Ausführung zielgerecht legiert vor. Die Fülldrahtelektroden 5, 5a weisen,insgesamt einen Durchmesser von 2,0 bis 3,2 mm ø auf. Durch die kreisrunde Querschnittsform der Fülldrahtelektroden wird zu dem erwünschten tiefen Einbrand und der hohen Aufmischung beigetragen.

Der Stromanschluss S wird mit einem Schweißstrom von etwa 600 - 950 A beaufschlagt, womit Abschmelzleistungen von 18 - 30 kg/h möglich sind. Der Strombereich bezieht sich auf beide Fülldrahtelektroden 5 und 5a insgesamt, so dass - unter der Annahme dass jede Fülldrahtelektrode zur Hälfte mit dem bereitgestellten Strom versorgt wird - jede Fülldrahtelektrode mit etwa 300 bis 475 A Schweißstrom beaufschlagt ist.

Die Verwendung von Fülldrahtelektroden 5, 5a anstelle von Massivdrahtelektroden erfolgt nicht nur aus legierungstechnischen Aspekten, sondern bietet zugleich den Vorteil der Leistungssteigerung, da sich hierdurch der stromführende Querschnitt verringern und die Stromdichte erhöhen lässt, wodurch die Abschmelzleistung erhöht werden kann.

Aus den geometrischen Gegebenheiten der Fülldrahtelektrode 5, 5a, insbesondere aus der zylinderischen Form der Mantelelektrode 11 und dem ausgewählten Schweißstrombereich ergibt sich eine hohe durchschnittliche Schweißstromdichte. Die Schweißstromdichte ist im Wesentlichen von der Querschnittsfläche der Mantelelektrode 11 abhängig, da der Kern 10 vornehmlich Kriechströme überträgt. Die verhältnismäßig hohe Schweißstromdichte trägt zu dem erfindungsgemäß erwünschten tiefen Einbrand und der großen Aufmischung bei.

In einem Vergleich zwischen einem Massivdraht und einem bzw. zwei Fülldrähten unter der Annahme einer annähernd gleichen Stromdichte, zeigt sich ein weiterer Vorteil von Fülldrähten, der auf den vergleichsweise größeren Umfang und die sich daraus ergebende größere zum Anhaften von metallischen Pulver geeignete Mantelfläche zurückzuführen ist.

Es werden beispielsweise zwei dünnere Fülldrahtelektroden eingesetzt, die im Vergleich zu einem flächengleichen dickeren Draht einen größeren Umfang aufweisen (vgl. Tabelle 1):

**Tabelle 1**

| Drahtduichmesser [mm] | Fläche [mm²] | Strom [A] | Stromdichte [A/mm²] | Umfang [mm] |
|---|---|---|---|---|
| 1 x 4,0 | 12,56 | 800 | 63 | 12,56 |
| 2 x 2,8 | 12,31 | 800 | 65 | 17,6 |

Ein größerer Drahtumfang führt bei gleicher Stromdichte zu erhöhter Anhaftung von Metallpulver 7, dessen Magnetisierbarkeit vorausgesetzt, bei gleicher magnetischer Feldstärke zur besseren und dichteren Anhaftung. Praktische Vorversuche haben ein Pulver-Drahtverhältnis von etwa 0,8 - 1,0 : 1 ergeben, was bedeutet, dass die Abschmelzleistung mindestens um den Betrag der zugeführten Pulvermenge gesteigert werden

Eine Zusammensetzung der Fülldrahtelektrode 5 bzw. 5a gemäß der Erfindung enthält im Wesentlichen die nachfolgend tabellarisch (Tabelle 2) aufgestellten Legierungselemente [in %]:

**Tabelle 2**

| C | Si | Mn | Cr | Ni | Mo | V |
|---|---|---|---|---|---|---|
| < 0,08 | 0,20 - 0,30 | 0,60 - 0,80 | 24 - 28 | 6 - 8 | 1,0 - 2,0 | 0,1 - 0,3 |

Die Zusammensetzung der Fülldrahtelektrode 5, 5a ist als Summe der Legierungselemente zu verstehen, die von dem aufgeschmolzenen Kern 10 und der aufgeschmolzenen Mantelelektrode 11 dem Schweißbad zugeführt wird. Dabei ist zu berücksichtigen, dass der Kern 10 durchaus andere Legierungsanteile als die Mantelelektrode 11 aufweisen kann.

Für die röhrenförmige Mantelelektrode 11 wird eine von dem Kern 10 abweichende Legierungszusammensetzung gewählt, die vornehmlich eine gute Magnetisierbarkeit aufweist. Diese Eigenschaft ist insbesondere deshalb wichtig, damit ausreichend Metallpulvers 7 an der Fülldrahtelektrode 5, 5a anhaften kann, welches in das Schweißbad transportiert werden soll. Eine bevorzugte Zusammensetzung der Mantelelektrode 11 der Fülldrahtelektrode 5 bzw. 5a weist mindestens die nachfolgend tabellarisch (Tabelle 3) aufgestellten Legierungselemente [in %] auf:

**Tabelle 3**

| C | Si | Mn | P | S | | |
|---|---|---|---|---|---|---|
| < 0,05 | <0,10 | <0,40 | <0,015 | <0,015 | | |

Im Wesentlichen kommt es jedoch darauf an, dass die Fülldrahtelektrode 5, 5a eine höhere Legierung als die zu erzeugende Nutzschicht 9 und in der Regel auch als der Grundwerkstoff 8 aufweist, so dass, gemäß der Erfindung, der Grundwerkstoff 8 in dem überdimensionalen Schweißbad durch die Zugabe von höherlegierten Fülldrahtelektroden 5, 5a auflegiert wird und sich nach dem Erkalten eine Nutzschicht 9 ausbildet, die in Summe die gewünschte Legierungszusammensetzung, insbesondere eine vergleichbare oder sogar bessere Legierungszusammensetzung einer als dritten Lage nach herkömmlichen UP-Auftragsschweißen aufgeschweißten Schicht, aufweist. Die Fülldrahtelektroden ist im Vergleich zur Sollanalyse überiegiert, um den hohen Einbrand (Aufmischung durch den Grundwerkstoff 40-50%) legierungstechnisch zu kompensieren, d.h. bereits in der ersten Lage wird die angestrebte Schweißgutanalyse realisiert.

Die Verwendung eines der Fülldrahtelektrode entsprechend legierten Massivdrahtes wäre denkbar, stößt aber an folgende Probleme:
1.) Eine derartige Legierung ist auf dem Markt nicht verfügbar und würde als Sonderfertigung immense Kosten verursachen
2.) Die Verformbarkeit ist zieh- oder walztechnisch nur bei geeigneter Zwischenglühung möglich.
3.) Die chemische Zusammensetzung eines derartigen Drahtes schränkt die Magnetisierbarkeit ein, weil dessen Gefüge über einen Austenitgehalt von etwa 30 % verfügt, was bekanntlich nicht magnetisierbar ist.

Der umgekehrte Weg, die Schweißgutlegierung ausschließlich über das Metallpulver vorzunehmen, scheitert ebenfalls an dessen eingeschränkter Magnetisierfähigkeit.

Das stromlos, magnetisch zugeführte Metallpulver 7 sollte unter qualitativen Aspekten der Legierung der aufzuschweißenden Nutzschicht 9 entsprechen. Denkbar sind selbstverständlich auch vorbestimmte, von der Schweißgutanalyse der einlagig aufgeschweißten Nutzschicht 9 abweichende Zusammensetzungen des Metallpulvers 7 zur Einstellung gewünschter metallurgischer Parameter. Hierzu kann vorteilhafterweise vorgesehen sein, dass die dritte Zuführeinrichtung 4 für das Metallpulver 7 mit einer Dosier- und/oder Mischeinrichtung ausgestattet ist, so dass sichergestellt werden kann, dass das zugeführte Metallpulver 7 in einer vorbestimmbaren Zusammensetzung, vorzugsweise exakt der Schweißgutanalyse einer aufzuschweißenden Nutzschicht 9, entspricht. Eine Einflussnahme auf die legierungstechnische Zusammensetzung durch den Schweißer wird hierdurch unterbunden und die Homogenität der aufgeschweißten Schicht nachhaltig erhöht, was zu einem gleichmäßigen Ausdehnungsverhalten über die gesamte Schichtdicke führt. Das Metallpulver als Vorschmelzlegierung entsprechend dem Schweißgut liegt in gas- oder wasserverdüster Form vor. Es sollte keine spratzige Körnung aufweisen, um über eine Dosier- und/oder Mischeinrichtung problemlos zugeführt werden zu können. Eine weitere Möglichkeit besteht darin, das Metallpulver zu agglomerieren, was den Vorteil hat, die Legierung in jeder gewünschten Art herzustellen. Notwendig sind sowohl für wasserverdüste als auch agglomerierte Metallpulver geeignete Dosiergeräte, was sich aus deren Kornform und dem relativ niedrigen Schüttgewicht erklärt. Für das Beschichten von beispielsweise Stranggießrollen wird eine Legierungszusammensetzung des Metallpulvers wie folgt vorgeschlagen [in %]:

**Tabelle 4**

| C | Si | Mn | Cr | Ni | Mo | V |
|---|---|---|---|---|---|---|
| < 0,08 | 0,15 - 0,30 | 0,4 - 0,8 | 12-14 | 3 - 4 | 0,5-1 | 0,10 - 0,30 |

Letztendlich handelt es sich hier um einen speziellen Anwendungsfall des vorgeschlagenen erfindungsgemäßen Verfahrens, d.h. für andere Anwendungsfälle kann die Legierungszusammensetzung je nach aufzuschweißender Nutzschicht selbstverständlich abweichen.

An das Schweißpulver sind die Anforderungen zu erheben, dass es legierungsneutral vorliegt. Außerdem sollte deren Schlacke unter Berücksichtigung des Einsatzes an rotationssymmetrischen Bauteilen eine hohe Viskosität und eine gute Schlackelöslichkeit auch bei erhöhter Arbeitstemperatur aufweisen. Darüber hinaus wird ein guter Schlackeabgang auch bei einer Arbeitstemperatur bis 350 °C verlangt. Ferner bestehen Anforderungen an die Viskosität der Schlacke, damit diese die Naht formt und nicht abläuft, was zu einer schweren Schlackelöslichkeit führen wurde.

Das vorgenannte Anforderungsprofil wird durch ein flouridbasisches Pulver nachstehender Zusammensetzung erfüllt (Tabelle 5).

**Tabelle 5**

| Si O₂ + TiO₂ | Al₂O₃ + Mn O | Ca F₂ |
|---|---|---|
| 10 % | 35 % | 50 % |

| | | |
|---|---|---|
| Basizitätsgrad nach Boniszewski: - 1,8 | | |

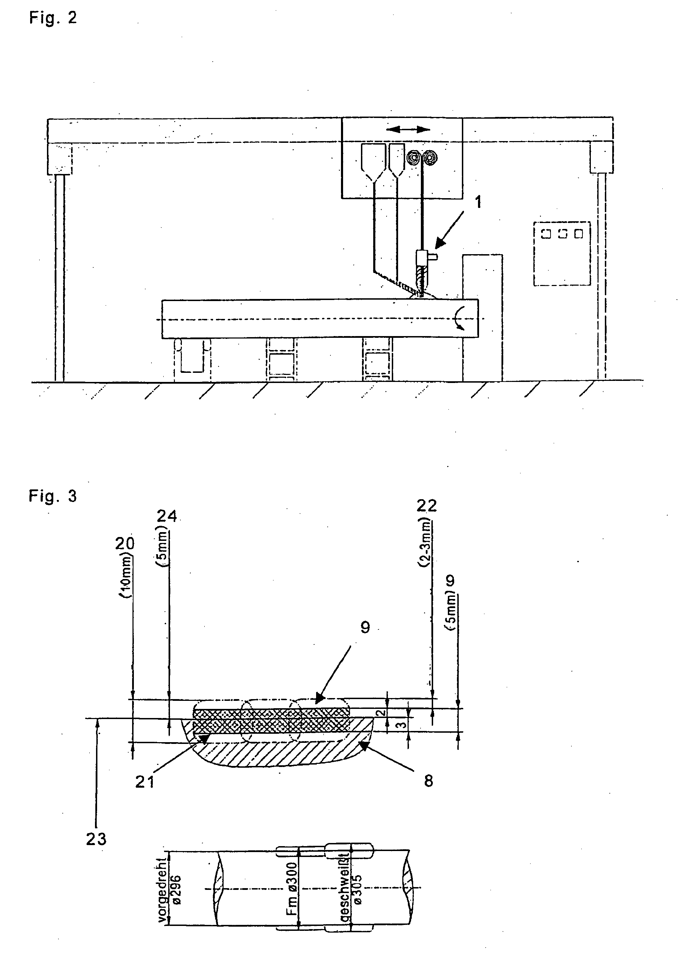

In Fig. 2 ist eine Auftragschweißanlage zur Plattierung einer Rolle 8 dargestellt. Es ist ein erfindungsgemäßer Schweißkopf 1 erkennbar, der oberhalb der Rolle 8 angeordnet ist. Auch sind die entsprechenden Komponenten, wie Steuereinrichtungen, Reservoire für Fülldrahtelektrode 5 und 5a, Metallpulver 7 und Schweißpulver 6, sowie die Vorschubeinrichtung für den erfindungsgemäßen Schweißkopf 1 erkennbar.

Das Verfahren zur Aufschweißung einer Nutzschicht 9 auf einen Grundwerkstoff stellt sich am Beispiel einer Rolle 8 als Grundwerkstoff wie folgt dar. Die jeweils angegebenen Ergebnisse stammen aus einer ersten Versuchsreihe. Es ist anzumerken, dass die Ergebnisse der ersten Versuchsreihe noch nicht vollständig den Erwartungen der aufzuschweißenden Nutzschicht entsprachen, insbesondere war der Chrom-Anteil in der Nutzschicht 9 noch nicht hoch genug. Nichtsdestotrotz sollen die Ergebnisse hier zu illustrativen Zwecken angeführt und erläutert werden.

Die Rolle 8 wird in eine Drehung mit vorbestimmter Drehgeschwindigkeit versetzt. Unter gleichzeitiger und wohldosierter Zuführung der ersten Fülldrahtelektrode 5 und der zweiten Fülldrahtelektrode 5a, metallhaltigem Pulver 7 und Schweißpulver 6 wird ein Lichtbogen zwischen den Fülldrahtelektroden 5, 5a und der Rolle erzeugt. Es bildet sich ein lokales Schweißbad auf der Grundwerkstoffoberfläche, umfassend im Wesentlichen eine Aufmischzone und eine Schweißraupe, aus, in dem sowohl die Fülldrahtelektroden 5 und 5a, Metallpulver 7 als auch ein lokaler Bereich des Grundwerkstoffes 8, sprich der Rollenoberfläche aufgeschmolzen werden und nach dem Erkalten eine Nutzschicht 9 und einen geringen Anteil an Schlacke ausbilden. Das Schweißpulver 6 trägt in vorteilhafter Weise zur Ausformung des Schweißbades und zur Abfuhr von Wärme bei. Entsprechend dem Vorschub des Schweißkopfes 1 wird die Rolle gewindeförmig mit der Nutzschicht 9 überzogen, die auf Grund der gleichzeitigen Zuführung von zwei Fülldrähten, sprich einem ersten Fülldrahtelektrode 5 und einem zweiten Fülldrahtelektrode 5a, metallhaltigem Pulver 7 und Schweißpulver 6 eine vollwertige Nutzschicht ausbilden, so dass keine weitere Schicht aufgeschweißt werden muss.

Insbesondere wird bei dem hier vorgeschlagenen erfindungsgemäßen Verfahren das sonst eher nachteilige Einbandprofil der UP-Drahtschweißung auf vorteilhafte Weise ausgenutzt, dergestalt, dass sich ein Aufmischungsgrad von ca. 40 - 50% ergibt, so dass bei diesem Verfahren etwa 40 - 50% des vornehmlich unlegierten Werkstücks in hochwertiges Schweißgut umgewandelt werden können.

Insgesamt kann sich eine Nutzschicht 9 ausbilden, die aus etwa 25% Schweißdraht, 25 % metallhaltigem Pulver und zu 50% aus der aufgeschmolzenen Oberfläche des Werkstücks besteht. Mit dieser Schweißtechnologie werden durch einlagiges Schweißen nutzbare Schweißgutdicken von 6 bis 12 mm erzielt. Die Kristallorientierung erfolgt dabei nahezu senkrecht zur Bauteiloberfläche, d. h. die risskritische Ausbildung der dendritischen Mittelrippe tritt nicht auf. Eine derartige Ausbildung des Nahtprofils bietet eine erhöhte Risssicherheit insbesondere bei der komplexen Beanspruchung von Stranggussrollen, die im Wesentlichen aus Betriebstemperatur, Thermoschock, Korrosionsverschleiß und dynamischer Belastung besteht.

Insgesamt wird ein Verfahren vorgeschlagen, welches individuelle Schweißgutlegierungen für unterschiedliche Anwendungsbereiche, insbesondere für die Hartstoffbeschichtung, ermöglicht. Insbesondere kann eine verschleißfeste Nutzschicht 9 in nur einem Aufschweißdurchgang hergestellt werden. Es sind keine weiteren Schichten, wie im Stand der Technik vorgesehen, aufzuschweißen. Dennoch ergibt sich ein homogenes Gefüge in der einen Nutzschicht 9 mit einer gleichmäßigen Analyse über den gesamten Schichtbereich.

In der hier vorgeschlagenen Ausführungsform am Beispiel des Auftragsschweißens an einer Kaltwalzrolle (vgl. insbesondere Fig. 3) ergibt sich ein insgesamt umgeschmolzener Bereich 20 von etwa 10mm. Der umgeschmolzene Bereich setzt sich zusammen aus einem Übergangsbereich 21 zwischen Grundwerkstoff 8 und Nutzschicht 9 und der Nutzschicht 9 als solches. Die Nutzschicht 9 mit einer Dicke von etwa 5mm ist hier bereits abzüglich einer Bearbeitungszugabe 22 von etwa 2-3mm dargestellt. Die Bearbeitungszugabe 22 wird in einem spanabhebenden Verfahren abgetragen, so dass sich eine effektive Nutzschicht 9 in dem hier gewählten Beispiel von etwa 5mm Dicke ergibt.

Es ist weiterhin der Aufschweißungseffekt ersichtlich, sofern die Dicken der einzelnen Schichten von der Oberfläche 23 des Grundwerkstoffes 8 betrachtet werden. Insgesamt sind etwa 3mm der Nutzschicht 9 unterhalb der Oberfläche 23 des Grundwerkstoffes angeordnet. Oberhalb der Oberfläche 23 des Grundwerkstoffes ist eine aufgetragene Schicht 24 von etwa 5mm angedeutet, wobei die aufgetragene Schicht 24 aus einem Teil der Nutzschicht 9 und einer Bearbeitungszugabe 22 von etwa 2-3mm besteht.

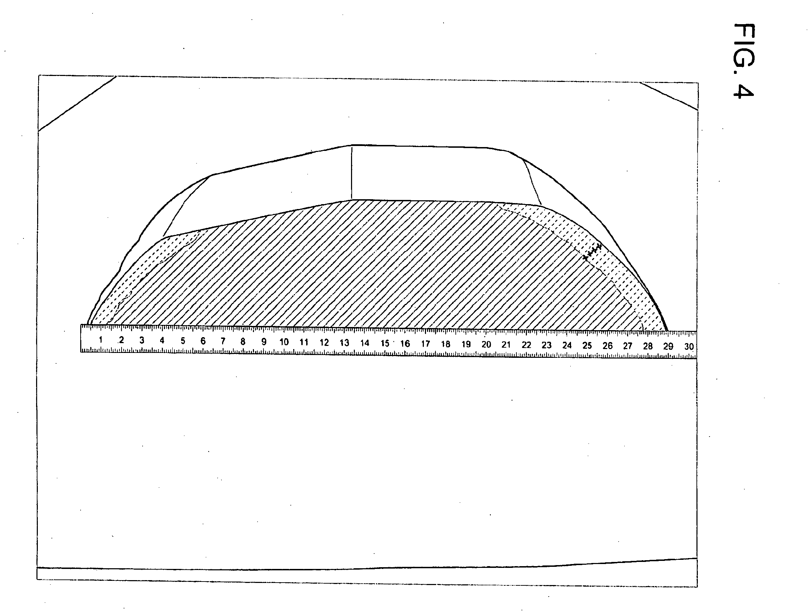

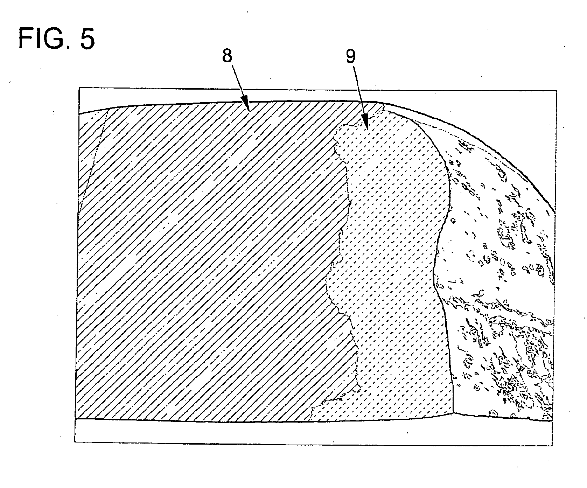

Die Fig. 4 und 5 stellen ein Segment einer gemäß dem erfindungsgemäß vorgeschlagenen Verfahren bearbeiteten Rolle dar, wobei das Rollensegment in geeigneter Weise aus der Rolle ausgeschnitten wurde.

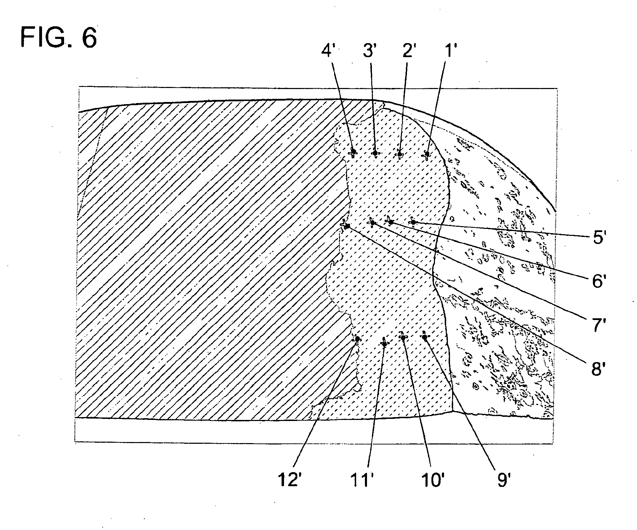

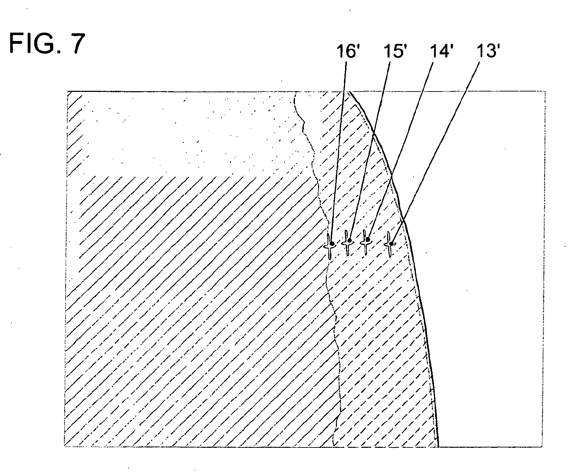

Auch in den Fig. 6 und 7 ist ein Segment einer Versuchsrolle dargestellt, das ausgesägt und geschliffen wurde. Um den Härteverlauf sichtbar zu machen wurden an denen mit Zahlen gekennzeichneten Stellen Härtprüfungen vorgenommen, deren Ergebnisse in nachfolgender Tabelle 6 dargestellt sind. Es ist zu erkennen, dass über den gesamten Querschnitt der Nutzschicht eine angestrebte gleichmäßige Härteverteilung vorliegt.

**Tabelle 6**

| Position | Härte HRC |
|---|---|
| 1' | 48,0 |
| 2' | 47,5 |
| 3' | 48,4 |
| 4' | 47 |
| 5' | 46,8 |
| 6' | 47,5 |
| 7' | 47,8 |
| 8' | 47,5 |
| 9' | 48,3 |
| 10' | 48,5 |
| 11' | 48,5 |
| 12' | 47,3 |
| 13' | 46,5 |
| 14' | 46,1 |
| 15' | 46,1 |
| 16' | 41,1 |

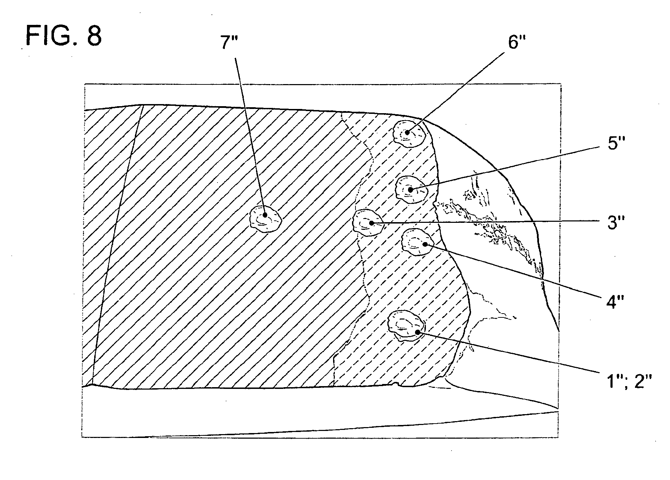

Auch ergibt sich eine sehr homogene Zusammensetzung hinsichtlich weiterer metallurgischer Parameter, die entsprechend der Fig. 8 an einem abgefräßten Probestück ermittelt wurden. Unter Berücksichtigung der sich hieraus ergebenden Messwerte gemäß nachfolgender Tabelle 7 lässt sich eine überaus homogene Verteilung der aufgeführten Legierungselemente entnehmen, so dass die erfindungsgemäß hergestellte einzige Nutzschicht eine Verwendbarkeit, insbesondere für nachgeordnete spanabhebende Bearbeitungsprozesse über den gesamten Querschnitt sicherstellen kann. Die Analyse wurde mit einem Mobilspektrometer an sieben Messpunkten, auf unterschiedlichen Positionen des Probestücks durchgeführt.

**Tabelle 7**

| | C | Si | Mn | Cu | Al | Cr | Mo | Ni | V | Ti | Nb | Co |
|---|---|---|---|---|---|---|---|---|---|---|---|---|
| 2'' | 0,079 | 0,55 | 0,83 | 0,19 | 0,022 | 11,81 | 1,68 | 1,89 | 0,17 | <0,01 | 0,04 | 0,08 |
| 3'' | 0,103 | 0,53 | 0,81 | 0,19 | 0,021 | 11,34 | 1,66 | 1,86 | 0,17 | <0,01 | 0,04 | 0,07 |
| 4'' | 0,087 | 0,53 | 0,84 | 0,20 | 0,021 | 11,7 | 1,68 | 1,86 | 0,17 | <0,01 | 0,04 | 0,08 |
| 5'' | 0,091 | 0,53 | 0,81 | 0,19 | 0,021 | 11,66 | 1,66 | 1,85 | 0,16 | <0,01 | 0,04 | 0,08 |
| 6'' | 0,082 | 0,55 | 0,88 | 0,19 | 0,024 | 12,89 | 1,70 | 1,95 | 0,16 | <0,01 | 0,04 | 0,09 |
| 7'' | 0,224 | 0,43 | 0,47 | 0,23 | 0,01 | 1,33 | 1,2 | 0,17 | 0,28 | <0,01 | 0,02 | 0,04 |

In einer weiteren Versuchsreihe konnten nachfolgende Resultate erzielt werden. Es ist anzumerken, dass die Erfahrungen der ersten Versuchsreihe genutzt werden konnten, um die Verfahrensparameter der zweiten Versuchsreihe zu optimieren. Insbesondere konnte durch eine Erhöhung des Chromgehaltes in dem Kern der Fülldrahtelektroden 5, 5a ein bevorzugter Chromgehalt in der Nutzschicht 9 eingestellt werden.

Der analytische Befund eine gemäß dem erfindungsgemäßen Verfahren aufgeschweißten Nutzschicht auf eine Stranggießrolle stellt sich wie folgt dar [in %] (Tabelle 8). Die Messpunkte sind analog dem Probestück gemäß Fig. 8 gesetzt worden.

**Tabelle 8**

| Grundwerkstoff 21 CrMoV 5 11 | **C** | **Si** | **Mn** | **Cr** | **Ni** | **Mo** | **V** |
|---|---|---|---|---|---|---|---|
| | 0,224 | 0,43 | 0,47 | 1 ,33 | 0,17 | 1,2 | 0,28 |
| Messpunkt | | | | | | | |
| 4'' | 0,082 | 0,45 | 0,80 | 12,9 | 1,92 | 1,7 | 0,17 |
| 5'' | 0,087 | 0,44 | 0,79 | 13,1 | 1,85 | 1,8 | 0,17 |
| 6'' | 0,084 | 0,46 | 0,82 | 13,0 | 1,88 | 1,7 | 1,17 |
| Nahtübergang/ Schweißgut | 0,103 | 0,45 | 0,78 | 12,8 | 1,79 | 1,7 | 0,16 |

Das Ergebnis ist eine sehr gleichmäßige Elementenverteilung.

Auch in der zweiten Versuchsreihe wurden Härtmessungen durchgeführt. Die jeweiligen Messwerte sind an vergleichbaren Messpunkten gemäß Fig. 6 und 7 genommen worden. Es ergeben sich nachfolgende Härten gemäß Tabelle 9:

**Tabelle 9**

| **Messpunkt** | 1' | 2' | 3' | 4' | 5' | 6' | 7' | 8' |
|---|---|---|---|---|---|---|---|---|
| **HRC** | 48,0 | 47,5 | 48,4 | 47,0 | 46,8 | 47,5 | 47,8 | 47,5 |
| **Position** | SG | SG | SG | SG | SG | SG | SG | SG / Ü |
| | | | | | | | | |
| **Messpunkt** | 9' | 10' | 11' | 12' | 13' | 14' | 15' | 16' |
| **HRC** | 48,3 | 48,5 | 48,5 | 47,3 | 47,5 | 47,1 | 47,2 | 41,1 |
| **Position** | SG | SG | SG | SG / Ü | SG | SG | SG | GW |

- SG: = Schweißgut (Nutzschicht)
- Ü: = Übergang
- GW: = Grundwerkstoff

Das Ergebnis dieser Untersuchung ist eine überaus homogene Härteverteilung, die den gestellten Anforderungen gerecht wird. Lediglich Messpunkt 16 liegt unter dem Härteniveau, weil dieser Messpunkt dem Grundwerkstoff entnommen wurde. Der nachgeordnete spangebende Bearbeitungsprozess ist damit über den gesamten Querschnitt sichergestellt.

Die vorteilhafte Wirtschaftlichkeit des vorgeschlagenen erfindungsgemäßen Verfahrens lässt sich an folgendem beispielhaften Vergleich mit einem herkömmlichen UP-Auftragsschweißen verdeutlichen. Eine Rolle mit einem Durchmesser von 300mm, einer Länge von 1000mm und einer Nutzschicht wird beim herkömmlichen UP-Bandschweißverfahren auf etwa 290mm Durchmesser vorgedreht und anschließend drei Schichten aufgeschweißt. Der Rollendurchmesser beträgt nach dem Schweißen 306mm, welches einer aufgetragenen Menge von 58,8kg Schweißgut entspricht.

Bei einem erfindungsgemäß vorgeschlagenen Verfahren wird die gleiche Rolle auf 296mm vorgedreht. Nach dem Aufschweißen der einen Nutzschicht beträgt der Rollendurchmesser 306mm. Dies entspricht jedoch einer aufgetragenen Menge von 37,12kg Schweißgut. Es ergibt sich eine Ersparnis von 21,7kg Schweißgut gegenüber dem Verfahren gemäß dem Stand der Technik, welches einer prozentualen Ersparnis von 36,9% entspricht.

Auch unter Betrachtung der sogenannten Abschmelzleistung einer herkömmlichen UP-Bandschweißung mit ca. 13kg/h (UP-Drahtschweißung ca. 8kg/h) ist durch das hier vorgeschlagene erfindungsgemäße Verfahren eine Abschmelzleistung von ca. 20kg/h zur erreichen, was einer Leistungssteigerung von 54% gegenüber dem herkömmlichen Verfahren bedeutet.

Auch ergibt sich durch das vorgeschlagene erfindungsgemäße Verfahren eine vorteilhafte Verkürzung der Schweißzeit, die insbesondere darauf beruht, dass lediglich eine Schicht, statt drei Schichten aufgeschweißt werden müssen. Für eine hier beispielhaft genannte Rolle beträgt die Schweißzeit im herkömmlichen UP-Bandschweißverfahren etwa 271 Minuten. Demgegenüber beträgt die Schweißzeit unter zu Hilfenahme des erfindungsgemäß vorgeschlagenen Verfahrens etwa 111 Minuten. Die Zeitersparnis beträgt etwa 160 Minuten, was einer prozentualen Leistungssteigerung von etwa 59% entspricht.

## Patentansprüche

1. "Unterpulverauftragsschweißverfahren zur Aufschweißung einer einzigen Nutzschicht (9) auf einen Grundwerkstoff, wobei eine erste Drahtelektrode (5) und mindestens eine zweite Drahtelektrode (5a) mit jeweils einem Schweißstrom beaufschlagt und dem Grundwerkstoff zur Erzeugung eines gemeinsamen Schweißbades kontinuierlich zugeführt wird, wobei dem Schweißbad Metallpulver (7) zugeführt wird, wobei dem Schweißbad Schweißpulver (6) zugeführt wird,
**dadurch gekennzeichnet, dass**
es sich bei den Drahtelektroden um Fülldrahtelektroden (5, 5a), aufweisend einen Kern (10) und eine Mantelelektrode (11) handelt, wobei
die Fülldrahtelektrode (5, 5a) eine höhere Legierung als die gewünschte Legierungszusammensetzung der einzigen aufzuschweißenden Nutzschicht (9) und des Grundwerkstoffs aufweist, wobei
die Fülldrahtelektrode (5, 5a) einen Anteil von < 0,08% Kohlenstoff; 0,2 bis 0,3% Silizium; 0,6 bis 0,8% Mangan; 24 bis 28,0% Chrom; 6 bis 8% Nickel, 1 bis 2% Molybdän und 0,1 bis 0,3% Vanadium aufweist, so dass die gewünschte Legierungszusammensetzung der aufzuschweißenden Nutzschicht einen Anteil von 12 - 14% Chrom, 3 - 4% Nickel und 0,5-1% Molybdän aufweist,
wobei
die Mantelelektrode (11) der Fülldrahtelektrode (5, 5a) aus einer Legierung besteht, die zum Anhaften des Metallpulvers (7) geeignete Magnetisierungseigenschaften aufweist."

2. Verfahren nach Anspruch 1, **dadurch gekennzeichnet, dass** die Fülldrahtelektrode (5, 5a) einen doppelt so hohen Chromanteil wie die aufzuschweißende Nutzschicht (9) aufweist.

3. Verfahren nach einem der vorhergehenden Ansprüche, **dadurch gekennzeichnet, dass** die Fülldrahtelektrode (5, 5a) einen doppelt so hohen Nickelanteil wie die aufzuschweißende Nutzschicht (9) aufweist.

4. Verfahren nach einem der vorhergehenden Ansprüche, **dadurch gekennzeichnet, dass** die Fülldrahtelektrode einen doppelt so hohen Molybdänanteil wie die aufzuschweißende Nutzschicht (9) aufweist.

5. Verfahren nach einem der vorhergehenden Ansprüche, **dadurch gekennzeichnet, dass** die Fülldrahtelektrode (5, 5a) eine kreisförmige Querschnittsfläche aufweist, wobei der Durchmesser der Fülldrahtelektrode (5, 5a) etwa 2 bis 3,2mm beträgt.

6. Verfahren nach einem der vorhergehenden Ansprüche, **dadurch gekennzeichnet, dass** jede Fülldrahtelektrode (5, 5a) mit etwa 300 bis 475 A Schweißstrom beaufschlagt ist.

7. Verfahren nach einem der vorhergehenden Ansprüche, **dadurch gekennzeichnet, dass** das Volumen der Mantelelektrode (11) etwa 70% des Gesamtvolumens der Fülldrahtelektrode (5, 5a) ausmacht.

8. Verfahren nach einem der vorhergehenden Ansprüche, **dadurch gekennzeichnet, dass** die Fülldrahtelektroden (5, 5a) mit Gleichstrom beaufschlagt werden, wobei der + Pol an der Fülldrahtelektrode (5, 5a) anliegt.

9. Verfahren nach einem der vorhergehenden Ansprüche, **dadurch gekennzeichnet, dass** die Fülldrahtelektroden (5, 5a) im Wesentlichen parallel, jedoch in einem ausgewählten Abstand voneinander zugeführt werden.

10. Verfahren nach einem der vorhergehenden Ansprüche, **dadurch gekennzeichnet, dass** die Fülldrahtelektroden (5, 5a) quer zur Schweißrichtung pendeln.

11. Verfahren nach einem der vorhergehenden Ansprüche, **dadurch gekennzeichnet, dass** die Mantelelektrode (11) der Fülldrahtelektrode (5, 5a) etwa einen Anteil von <0,05% C; <0,10% Si; <0,40% Mn; <0,015% P; <0,015% S aufweist.

12. Verfahren nach einem der vorhergehenden Ansprüche, **dadurch gekennzeichnet**, das die Zusammensetzung des Metallpulvers (7) der gewünschten Legierungszusammensetzung der aufzuschweißenden Nutzschicht (9) entspricht.

13. Verfahren nach einem der vorhergehenden Ansprüche, **dadurch gekennzeichnet, dass** das Metallpulver (7) ferritische Anteile aufweist.

14. Verfahren nach einem der vorhergehenden Ansprüche, **dadurch gekennzeichnet, dass** das Metallpulver (7) stromlos zugeführt wird.

15. Verfahren nach einem der vorhergehenden Ansprüche, **dadurch gekennzeichnet, dass** ein Metallpulver (7) in gas- oder wasserverdüster Form verwendet wird.

16. Verfahren nach einem der vorhergehenden Ansprüche, **dadurch gekennzeichnet, dass** ein Metallpulver (7) in agglomerierter Form verwendet wird.

17. Verfahren nach einem der vorhergehenden Ansprüche, **dadurch gekennzeichnet, dass** das Metallpulver (7) etwa einen Anteil von < 0,08% Kohlenstoff; 0,15 bis 0,3% Silizium; 0,4 bis 0,8% Mangan; 12 bis 14% Chrom; 3 bis 4% Nickel; 0,5 bis 1% Molybdän und 0,1 bis 0,3% Vanadium aufweist.

18. Verfahren nach einem der vorhergehenden Ansprüche, **dadurch gekennzeichnet, dass** ein legierungsneutrales Schweißpulver (6) verwendet wird.

19. Verfahren nach einem der vorhergehenden Ansprüche, **dadurch gekennzeichnet, dass** das ein mineralisches Schweißpulver (6) verwendet wird.

20. Verfahren nach einem der vorhergehenden Ansprüche, **dadurch gekennzeichnet, dass** ein Schweißpulver (6) verwendet wird, dessen Schlacke unter Berücksichtigung des Einsatzes an rotationssymmetrischen Bauteilen eine hohe Viskosität und eine gute Schlackelöslichkeit bei erhöhter Arbeitstemperatur aufweist.

21. Verfahren nach einem der vorhergehenden Ansprüche, **dadurch gekennzeichnet, dass** das Schweißpulver (6) etwa einen Anteil von etwa 10% SiO₂ + TiO₂; 35% Al₂O₃ + MnO; 50% CaF₂ aufweist.

22. Verfahren nach einem der vorhergehenden Ansprüche, **dadurch gekennzeichnet, dass** es sich bei dem Grundwerkstoff um eine Rolle (8) handelt, wobei die Fülldrahtelektroden (5, 5a), das Metallpulver und das Schweißpulver durch einen Schweißkopf (1) zugeführt werden, wobei die Rolle (8) unterhalb des Schweißkopfes (1) in Drehung versetzt wird, wobei der Schweißkopf (1) in Längsrichtung der Rolle (8) vorgeschoben wird.

23. Verfahren nach einem der vorhergehenden Ansprüche, **dadurch gekennzeichnet, dass** die aufgeschweißte Nutzschicht aus etwa 25% Fülldrahtdraht (5, 5a), 25 % metallhaltigem Pulver (7) und zu 50% aus der aufgeschmolzenen Oberfläche des Grundwerkstoffs besteht.

## Claims

1. Method for surfacing by submerged-arc welding for welding a single wear layer (9) onto a parent material,
wherein
a first wire electrode (5) and at least one second wire electrode (5a) each have a welding current applied to them, and are fed continuously to the parent material in order to produce a common weld pool, wherein metal powder (7) is supplied to the weld pool, and wherein welding powder (6) is supplied to the weld pool,
**characterized in that**
the wire electrodes are flux-cored wire electrodes (5, 5a) having a core (10) and having a casing electrode (11), wherein
the flux-cored wire electrode (5, 5a) has a higher alloy than the desired alloy composition of the single wear layer (9) to be welded on and of the parent material, wherein
the flux-cored wire electrode (5, 5a) has a content of < 0.08% carbon; 0.2 to 0.3% silicon; 0.6 to 0.8% manganese; 24 to 28.0% chromium; 6 to 8% nickel, 1 to 2% molybdenum and 0.1 to 0.3% vanadium, so that the desired alloy composition of the wear layer to be welded on has a content of 12-14% chromium, 3-4% nickel and 0.5-1% molybdenum, wherein
- the casing electrode (11) of the flux-cored wire electrode (5, 5a) is composed of an alloy which has suitable magnetization characteristics for adhesion of the metal powder (7).

2. Method according to claim 1, **characterized in that** the flux-cored wire electrode (5, 5a) has a chromium content which is twice as high as that of the wear layer (9) to be welded on.

3. Method according to one of the preceding claims, **characterized in that** the flux-cored wire electrode (5, 5a) has a nickel content which is twice as high as that of the wear layer (9) to be welded on.

4. Method according to one of the preceding claims, **characterized in that** the flux-cored wire electrode has a molybdenum content which is twice as high as that of the wear layer (9) to be welded on.

5. Method according to one of the preceding claims, **characterized in that** the flux-cored wire electrode (5, 5a) has a circular cross-sectional area, wherein the diameter of the flux-cored wire electrode (5, 5a) is approximately 2 to 3.2 mm.

6. Method according to one of the preceding claims, **characterized in that** each flux-cored wire electrode (5, 5a) has a welding current of approximately 300 to 475 A applied to it.

7. Method according to one of the preceding claims, **characterized in that** the volume of the casing electrode (11) makes up approximately 70% of the total volume of the flux-cored wire electrode (5, 5a).

8. Method according to one of the preceding claims, **characterized in that** the flux-cored wire electrodes (5, 5a) have direct current applied to them, wherein the + pole is connected to the flux-cored wire electrode (5, 5a).

9. Method according to one of the preceding claims, **characterized in that** the flux-cored wire electrodes (5, 5a) are fed essentially parallel, but at a selected distance from one another.

10. Method according to one of the preceding claims, **characterized in that** the flux-cored wire electrodes (5, 5a) oscillate transversely to the welding direction.

11. Method according to one of the preceding claims, **characterized in that** the casing electrode (11) of the flux-cored wire electrode (5, 5a) has a content of approximately < 0.05% C; < 0.10% Si; < 0.40% Mn; < 0.015% P; and < 0.015% S.

12. Method according to one of the preceding claims, **characterized in that** the composition of the metal powder (7) corresponds to the desired alloy composition of the wear layer (9) to be welded on.

13. Method according to one of the preceding claims, **characterized in that** the metal powder (7) has ferritic components.

14. Method according to one of the preceding claims, **characterized in that** the metal powder (7) is fed in a currentless manner.

15. Method according to one of the preceding claims, **characterized in that** a metal powder (7) is used in gas-atomized or water-atomized form.

16. Method according to one of the preceding claims, **characterized in that** a metal powder (7) is used in agglomerated form.

17. Method according to one of the preceding claims, **characterized in that** the metal powder (7) has a content of approximately < 0.08% carbon; 0.15 to 0.3% silicon; 0.4 to 0.8% manganese; 12 to 14% chromium; 3 to 4% nickel, 0.5 to 1% molybdenum and 0.1 to 0.3% vanadium.

18. Method according to one of the preceding claims, **characterized in that** an alloying-neutral welding powder (6) is used.

19. Method according to one of the preceding claims, **characterized in that** a mineral welding powder (6) is used.

20. Method according to one of the preceding claims, **characterized in that** a welding powder (6) is used whose slag has a high viscosity and good slag solubility at a raised working temperature, taking into account use on rotationally symmetrical components.

21. Method according to one of the preceding claims, **characterized in that** the welding powder (6) has a content of approximately 10% SiO₂ + TiO₂; 35% Al₂O₃ + MnO; 50% CaF₂.

22. Method according to one of the preceding claims, **characterized in that** the parent material is a roller (8), wherein the flux-cored wire electrodes (5, 5a), the metal powder and the welding powder are fed through a welding head (1), wherein the roller (8) is caused to rotate underneath the welding head (1), and wherein the welding head (1) is pushed forward in the longitudinal direction of the roller (8).

23. Method according to one of the preceding claims, **characterized in that** the welded-on wear layer is composed of approximately 25% flux-cored wire (5, 5a), 25% of metalliferous powder (7) and 50% of the melted-on surface of the parent material.

## Revendications

1. Procédé de soudage de rechargement sous poudre pour le dépôt par soudage d'une seule couche d'usure (9) sur un matériau de base; on alimente un premier fil-électrode (5) et au moins un deuxième fil-électrode (5a) respectivement avec un courant de soudage et on les approche en continu du matériau de base pour la production d'un bain de soudage commun; on ajoute une poudre métallique (7) au bain de soudage; on ajoute une poudre à souder (6) au bain de soudage, **caractérisé en ce que** les fils-électrodes sont des fils-électrodes fourrés (5, 5a) présentant une noyau (10) et une électrode enrobée (11); le fil-électrode fourré (5, 5a) présente un alliage plus élevé que la composition d'alliage désirée de la couche d'usure unique à déposer par soudage (9) et du matériau de base; le fil-électrode fourré (5, 5a) présente une proportion de < 0,08 % de carbone; 0,2 à 0,3 % de silicium; 0,6 à 0,8 % de manganèse; 24 à 28,0 % de chrome; 6 à 8 % de nickel, 1 à 2 % de molybdène et 0,1 à 0,3 % de vanadium, de telle manière que la composition d'alliage désirée de la couche d'usure à déposer par soudage présente une proportion de 12 à 14 % de chrome, 3 à 4 % de nickel et 0,5 à 1 % de molybdène; l'électrode enrobée (11) du fil-électrode fourré (5, 5a) se compose d'un alliage, qui présente des propriétés de magnétisation adéquates pour l'adhérence de la poudre métallique (7).

2. Procédé selon la revendication 1, **caractérisé en ce que** le fil-électrode fourré (5, 5a) présente une proportion de chrome deux fois plus élevée que la couche d'usure à déposer par soudage (9).

3. Procédé selon l'une quelconque des revendications précédentes, **caractérisé en ce que** le fil-électrode fourré (5, 5a) présente une proportion de nickel deux fois plus élevée que la couche d'usure à déposer par soudage (9).

4. Procédé selon l'une quelconque des revendications précédentes, **caractérisé en ce que** le fil-électrode fourré présente une proportion de molybdène deux fois plus élevée que la couche d'usure à déposer par soudage (9).

5. Procédé selon l'une quelconque des revendications précédentes, **caractérisé en ce que** le fil-électrode fourré (5, 5a) présente une surface de section transversale circulaire; le diamètre du fil-électrode fourré (5, 5a) vaut environ 2 à 3,2 mm.

6. Procédé selon l'une quelconque des revendications précédentes, **caractérisé en ce que** chaque fil-électrode fourré (5, 5a) est alimenté avec un courant de soudage d'environ 300 à 475 A.

7. Procédé selon l'une quelconque des revendications précédentes, **caractérisé en ce que** le volume de l'électrode enrobée (11) représente environ 70 % du volume total du fil-électrode fourré (5, 5a).

8. Procédé selon l'une quelconque des revendications précédentes, **caractérisé en ce que** les fils-électrodes fourrés (5, 5a) sont alimentés en courant continu ; le pôle + étant raccordé au fil-électrode fourré (5, 5a).

9. Procédé selon l'une quelconque des revendications précédentes, **caractérisé en ce que** les fils-électrodes fourrés (5, 5a) sont approchés essentiellement en parallèle, mais à une distance choisie l'un de l'autre.

10. Procédé selon l'une quelconque des revendications précédentes, **caractérisé en ce que** les fils-électrodes fourrés (5, 5a) oscillent transversalement à la direction de soudage.

11. Procédé selon l'une quelconque des revendications précédentes, **caractérisé en ce que** l'électrode enrobée (11) du fil-électrode fourré (5, 5a) présente environ une proportion de < 0,05 % C; < 0,10 % Si; < 0,40 % Mn; < 0,015 % P; < 0,015 % S.

12. Procédé selon l'une quelconque des revendications précédentes, **caractérisé en ce que** la composition de la poudre métallique (7) correspond à la composition d'alliage désirée de la couche d'usure à déposer par soudage (9).

13. Procédé selon l'une quelconque des revendications précédentes, **caractérisé en ce que** la poudre métallique (7) présente des parties ferritiques.

14. Procédé selon l'une quelconque des revendications précédentes, **caractérisé en ce que** la poudre métallique (7) est amenée sans courant.

15. Procédé selon l'une quelconque des revendications précédentes, **caractérisé en ce que** l'on utilise une poudre métallique (7) sous forme pulvérisée au gaz ou à l'eau.

16. Procédé selon l'une quelconque des revendications précédentes, **caractérisé en ce que** l'on utilise une poudre métallique (7) sous forme agglomérée.

17. Procédé selon l'une quelconque des revendications précédentes, **caractérisé en ce que** la poudre métallique (7) présente environ une proportion de < 0,08 % de carbone; 0,15 à 0,3 % de silicium; 0,4 à 0,8 % de manganèse; 12 à 14 % de chrome; 3 à 4 % de nickel; 0,5 à 1 % de molybdène et 0,1 à 0,3 % de vanadium.

18. Procédé selon l'une quelconque des revendications précédentes, **caractérisé en ce que** l'on utilise une poudre à souder (6) neutre en alliage.

19. Procédé selon l'une quelconque des revendications précédentes, **caractérisé en ce que** l'on utilise une poudre à souder (6) minérale.

20. Procédé selon l'une quelconque des revendications précédentes, **caractérisé en ce que** l'on utilise une poudre à souder (6), dont la scorie présente, compte tenu de l'utilisation sur des composants à symétrie de révolution, une viscosité élevée et une bonne solubilité de la scorie à une température de travail accrue.

21. Procédé selon l'une quelconque des revendications précédentes, **caractérisé en ce que** la poudre à souder (6) présente une proportion d'environ 10% SiO₂ + TiO₂; 35 % Al₂O₃ + MnO; 50 % CaF₂.

22. Procédé selon l'une quelconque des revendications précédentes, **caractérisé en ce que** le matériau de base est un rouleau (8); les fils-électrodes fourrés (5, 5a), la poudre métallique et la poudre de soudage sont amenés par une tête de soudage (1); le rouleau (8) est mis en rotation en dessous de la tête de soudage (1); la tête de soudage (1) est avancée dans la direction longitudinale du rouleau (8).

23. Procédé selon l'une quelconque des revendications précédentes, **caractérisé en ce que** la couche d'usure déposée par soudage se compose environ de 25 % de fil-électrode fourré (5, 5a), 25 % de poudre métallique (7) et 50 % de la surface fondue du matériau de base.
